# EUROPÄISCHE PATENTSCHRIFT

(11) **EP 3 871 855 B1**
(45) Veröffentlichungstag und Bekanntmachung des Hinweises auf die Patenterteilung: **30.08.2023**
(21) Anmeldenummer: 20160078.0
(22) Anmeldetag: 28.02.2020
(51) Int. Cl.: B29C 45/14, B29C 45/64, B29C 45/00, B29C 45/66, B29L 31/00, B29L 31/30

(54) **TRANSFERANLAGE MIT EINER AUF EINEM ZUSTELLTISCH INTEGRIERTEN ANSPRITZVORRICHTUNG**
TRANSFER SYSTEM WITH AN INJECTION DEVICE INTEGRATED ON A DELIVERY TABLE
SYSTÈME DE TRANSFERT AVEC UN DISPOSITIF D'INJECTION INTÉGRÉ SUR UNE TABLE DE LIVRAISON

(43) Veröffentlichungstag der Anmeldung: 01.09.2021
(73) Patentinhaber: Stefan Pfaff Werkzeug- und Formenbau GmbH & Co. KG, 88167 Röthenbach (DE)
(72) Erfinder: SUTTER, Anton, 88171 Weiler-Simmerberg (DE)
(74) Vertreter: Otten, Roth, Dobler & Partner mbB Patentanwälte

(56) Entgegenhaltungen:
- EP-A1- 3 605 759
- WO-A1-2009/143583
- DE-B- 1 201 040
- JP-A- 2015 157 410
- JP-A- 2017 087 702

## Beschreibung

Die Erfindung betrifft eine Transferanlage zum Transport und zur Bearbeitung von Profilen, insbesondere Türdichtungsprofilen für Kraftfahrzeuge nach dem Oberbegriff des Anspruchs 1.

Aus dem Stand der Technik sind zahlreiche Transferanlagen bekannt, bei denen Dichtungsprofile für Kraftfahrzeuge über eine Transportstraße bewegt werden und somit von einer Bearbeitungsstation zur nächsten gelangen. In derartigen Transferanlagen kommen auch Zustelltische zum Einsatz, die in der Regel Schneidwerkzeuge tragen, einschließlich des Werkzeugs an das Profil herangefahren werden und das Profil schneiden. Außerdem sind prinzipiell bei derartigen Transferanlagen nach dem Stand der Technik auch separate Bearbeitungsstationen vorgesehen, wobei das Profil diesen Stationen zugeführt wird, indem es sogar aus der eigentlichen Transportstraße entnommen wird.

Darüber hinaus sind aus den Druckschriften JP 2015 157 410 A, EP 3 605 759 A1 und WO 2009/143 583 A1 unterschiedlichste Transportvorrichtungen zum Transport von Profilen offenbaren, wobei entsprechend eine Anspritzvorrichtung eine Schließeinheit aufweist, um Konturteile zu öffnen und zu schließen.

Aufgabe der Erfindung ist es, eine Transferanlage bereitstellen zu können, die gegenüber den bisherigen, aus dem Stand der Technik bekannten Transferanlagen bei höherer Flexibilität deutliche Kostenvorteile mit sich bringen kann.

Die Aufgabe wird, ausgehend von einer Transferanlage der eingangs genannten Art, durch die kennzeichnenden Merkmale des Anspruchs 1 gelöst.

Durch die in den abhängigen Ansprüchen genannten Maßnahmen sind vorteilhafte Ausführungen und Weiterbildungen der Erfindung möglich.

Die Erfindung zeichnet sich dadurch aus, dass die Antriebsvorrichtung wenigstens einen Steuerring umfasst, der drehfest mit wenigstens einem Mitnehmerbolzen verbunden ist. Ein Steuerring zeichnet sich vor allem dadurch aus, dass er ebenfalls platzsparend integriert werden kann. Ist eine gemeinsame Antriebsvorrichtung vorgesehen, eignet sich der Steuerring aufgrund seiner Bauweise als zentrales Kraftübertragungselement. Ein Steuerring kann in der Mitte hohl bzw. mit einer Aussparung ausgebildet sein, sodass das Profil in diesem Bereich durch den Steuerring hindurch bewegt werden kann. Die Antriebsvorrichtung bildet sodann einen Teil des Rahmens und kann somit peripher angeordnet werden, ohne dem Profil oder den verschwenkbaren Teilen der Anspritzvorrichtung im Wege zu stehen. Um eine Kraft bzw. ein Drehmoment weiter übertragen zu können ist der Steuerring drehfest mit einem Mitnehmerbolzen verbunden. Der Steuerring wiederum kann bei einer Ausführungsvariante der Erfindung durch einen Motor angetrieben bzw. gedreht werden. Dies ermöglicht eine unabhängige Ansteuerung des Steuerrings.

Gleichermaßen kann diese Bewegung durch die Linearverschiebung des Zustelltischs getriggert bzw. mit dieser synchronisiert werden, wozu eine entsprechende Kontrolleinheit zur Steuerung bzw. Regelung vorgesehen sein kann. In vorteilhafter Weise kann zum Beispiel ein Elektromotor eingesetzt werden, der vor allen Dingen kostengünstig und platzsparend integriert werden kann und auch hinsichtlich seines Gewichts zu einer Leichtbauweise beitragen kann.

Die erfindungsgemäße Transferanlage dient zur Bearbeitung von Profilen und kann vor allem zur Herstellung von Türdichtungsprofilen für Kraftfahrzeuge eingesetzt werden. Während der Bearbeitung werden die Profile über einen bestimmten Transportweg transportiert und gelangen so von einer Bearbeitungsstation zur nächsten. Eine solche Bearbeitungsstation kann grundsätzlich z.B. in Form von mit Werkzeugen bestückten Zustelltischen vorliegen.

Bei der Erfindung ist eine Transportvorrichtung zum Transport des Profils auf dem Transportweg vorgesehen. Darüber hinaus verfügt die Transferanlage über wenigstens einen ersten Zustelltisch, der relativ zum Transportweg bzw. zum auf dem Transportweg zu verfahrenden Profil bewegbar ist. In der Regel bietet es sich an, dass der Verfahrweg des Zustelltischs senkrecht zum Transportweg verläuft. Typische Bearbeitungen in den einzelnen Bearbeitungsstationen sind zum Beispiel das Beschneiden der Profile mittels Schneidwerkzeugen oder das Biegen mittels entsprechender Biegevorrichtungen.

Erfindungsgemäß ist darüber hinaus mindestens eine Anspritzvorrichtung zur Herstellung einer Endanspritzung, zur Anspritzung eines weiteren Profilabschnitts, eines Positionierpins oder zur Verbindung des Profils mit einem weiteren Profilabschnitt vorgesehen. Bei der Anspritzung wird das entsprechende Profil durch weiteres, angespritztes Kunststoffmaterial ergänzt. Dabei kann es sich um einen Abschluss am Ende des Profils bzw. eine Endkappe handeln, es kann aber auch ein weiterer Profilabschnitt insgesamt angespritzt werden. Denkbar ist auch, dass das Profil an einen weiteren, bereits vorhandenen Profilabschnitt platziert wird und beide durch eine Anspritzung miteinander verbunden werden. Darüber hinaus können auch sogenannte Positionierpins angespritzt werden, welche dazu dienen, eine bestimmte Stelle am Profil zu markieren, sodass diese zum Beispiel zur Ausrichtung des Profils in einer Bearbeitungsstation verwendet werden kann. Positionierpins können darüber hinaus auch bei der Montage genutzt werden, um das Profil in Bezug auf eine Tür oder einen Karosserieabschnitt leichter ausrichten und montieren zu können.

Die Transportvorrichtung platziert auf dem Transportweg das Profil in einer Bearbeitungsposition, in der das Profil bearbeitet wird, hier insbesondere auch bei einer Bearbeitung durch eine Anspritzvorrichtung, wie es die Erfindung vorsieht.

Die erfindungsgemäße Transferanlage zeichnet sich nun dadurch aus, dass zumindest ein Teil der Anspritzvorrichtung auf dem Zustelltisch montiert und mit diesem verfahren wird. Die Anspritzvorrichtung umfasst zunächst eine Form zur Aufnahme und Halterung des Profils bei der Anspritzung und zur Ausbildung der beim Anspritzen zu verfüllenden Kavität. Bei der Kavität handelt es sich um den Raum, in den das flüssige Kunststoffmaterial bei der Anspritzung gelangen kann, wobei die Anspritzung zum Beispiel den Endabschnitt oder den neuen Profilabschnitt bildet. Die Form setzt sich aus wenigstens zwei Konturteilen zusammen, um das Profil während der Anspritzung in dem anzuspritzenden Teil zu umschließen und die Kavität am Profil auszubilden. Ferner umfasst die Anspritzvorrichtung eine Schließeinheit, um die Konturteile zu öffnen und zu schließen, wobei die Schließeinheit wiederum dazu ausgebildet ist, bei der Bewegung des ersten Zustelltischs relativ zum Profil die Konturteile so lange geöffnet zu halten, bis der Zustelltisch seine Endposition relativ zur Bearbeitungsposition des Profils erreicht hat, sodass der zu bearbeitende Profilabschnitt auch tatsächlich von den Konturteilen umschlossen werden kann. Das bedeutet, dass die Transportvorrichtung das Profil über den Transportweg fährt und anhält, sobald sich das Profil in einer entsprechenden Bearbeitungsposition, z.B. für einen Anspritzvorgang, befindet.

Allerdings ist erfindungsgemäß die Anspritzvorrichtung nicht stationär als gesonderte Bearbeitungszelle ausgebildet, sondern befindet sich auf einem Zustelltisch, der sich sodann relativ zum Profil, das sich in der Bearbeitungsposition befindet, bewegt. In diesem Bereich sind die Konturteile der Form bzw. der Anspritzvorrichtung in einer Position, sodass sie mit dem Profil nicht kollidieren. Bei einer Ausführungsform können diese z.B. verschwenkt werden. Erst beim Schließen der Form durch Bewegung der Konturteile wird das Profil aufgenommen, sodass die zu verfüllende Kavität gebildet werden kann. Dieser Schließvorgang ist erst dann abgeschlossen, sodass der eigentliche Anspritzvorgang starten kann, wenn die Anspritzvorrichtung mit dem Zustelltisch bereits in Richtung zum Transportweg hinreichend verfahren wurde, sodass durch Schließen der Form das Profil gehalten werden kann. Die Transportvorrichtung muss jedoch das Profil zum Beispiel auch nicht drehen, sondern kann das Profil erfindungsgemäß lediglich parallel zum Transportweg verfahren.

Darüber hinaus ist eine Schließeinheit vorgesehen, mit der die Konturteile geöffnet und geschlossen werden können, wobei die Schließeinheit bei der Bewegung des ersten Zustelltischs relativ zum Profil die Konturteile so lange geöffnet hält, bis das Profil von den Konturteilen aufgenommen werden kann, d.h. der erste Zustelltisch ist entsprechend weit genug in Richtung des Transportwegs bzw. des Profils verfahren werden und die Konturteile können das Profil in der Bearbeitungsposition aufnehmen. Sodann schließt die Schließeinheit, und die Konturteile umgeben von außen das zu bearbeitende Profil.

Aus dem Stand der Technik ist u.a. bekannt, die Profile zu bewegen und in die Anspritzvorrichtung einzubringen; deshalb werden nach dem Stand der Technik die Profile unter anderem manuell entnommen und in entsprechende Anspritzvorrichtungen (Anspritzzellen) eingelegt. Derartige herkömmliche Bearbeitungsstationen aus dem Stand der Technik erfordern zunächst wesentlich mehr Platz. Gegebenenfalls muss auch pro Station ein Arbeiter zur Verfügung stehen, der die Profile entsprechend entnimmt und in der Anspritzvorrichtung positioniert bzw. auch daraus wieder entnimmt. Werden die Profile in eine Anspritzvorrichtung maschinell eingebracht, so müssen diese nach dem Stand der Technik im Allgemeinen noch gedreht werden, was bei der vorliegenden Erfindung nicht notwendig ist, zumal eine Schließeinheit vorgesehen ist, welche die Konturteile verfahren und auch quer zum Transportweg des Profils bewegt werden kann, sowohl beim Öffnen als auch beim Schließen, ohne dass das Profil dadurch bewegt werden muss, sondern in seiner Bearbeitungsposition verharren kann.

Die Anspritzvorrichtung kann somit platzsparend auf einem Zustelltisch untergebracht werden. Dies sorgt bei der entsprechenden Anlage auch für ein wesentlich höheres Maß an Flexibilität, weil die entsprechenden Zustelltische kompakt ausgebildet sind und auch leicht wieder umgerüstet werden können, während herkömmliche Anspritzvorrichtung nach dem Stand der Technik sehr viel Platz benötigen und sehr kostenaufwendig sind. Beim Nachrüsten einer Anspritzvorrichtung musste bislang nach dem Stand der Technik in der Regel ein vollständiger Umbau der Transferanlage erfolgen, weil der Transportweg z.B. an der Stelle, an der die Anspritzstation einzufügen ist, unterbrochen werden musste, Zustelltische umgestellt werden müssen usw.

Ein erfindungsgemäßes Transfersystem ist also über seine gesamte Lebensdauer wesentlich flexibler nutzbar und einsetzbar, da ohne allzu großen Aufwand Zustelltische ausgebaut oder getauscht werden können, während solche Arbeitsstationen, die grundsätzlich eine Unterbrechung des Transports auf dem Transportweg darstellen, vermieden werden können. Fix eingebaute Anspritzstationen und die dazugehörenden Handling-Systeme, mit denen das Profil gedreht bzw. in die Position gebracht werden muss, können entfallen.

Werkzeuge und Schließeinheit sind insgesamt leichter und können somit dynamischer beim Rüsten und in der Fertigung eingesetzt werden. Die Anlage kann insbesondere auch vergleichsweise einfach umgebaut bzw. umgerüstet werden. Die Anlage kann als Leichtbau gefertigt werden, da die Anspritzvorrichtung wesentlich weniger Gewicht aufweisen kann und auch soll, um auf dem Zustelltisch untergebracht zu werden. Die erfindungsgemäße Transferanlage eignet sich daher besonders für Anspritzvorgänge, bei denen kein zu hoher Anspritzdruck vonnöten ist, z.B. bei der Endkappen-Anspritzung. Ferner können auch Heißkanäle im vorliegenden Fall für die Anspritzung nicht beliebig verlegt bzw. bewegt werden, da die Zustelltische erfindungsgemäß mit der Aspritzvorrichtung darauf eine Linearbewegung ausführen.

Vor allem entsteht dadurch ein erheblicher Kostenvorteil, da durch den Wegfall einer zusätzlichen Vorrichtung zum Handling und einiger Teile der Anspritzstation auch die Grundinvestitionen für die Maschine geringer ausfallen kann. Falls notwendig, können Anspritzstationen auch im Nachhinein noch eingefügt werden, indem einer der Zustelltische umgerüstet oder zusätzlich eingebaut wird.

Durch das Unterbringen der Anspritzvorrichtung auf einen Zustelltisch erhält die erfindungsgemäße Transferanlage einen modularen Aufbau. Zustelltische werden wie gesonderte Module behandelt und können ausgetauscht werden. Auch eine schnellere Bearbeitung und kürzere Zykluszeiten, die sich aus der Maschinenzeit und der Handling-Zeit des Profils zusammensetzen, sind möglich, da sich der Aufwand für das Handling der Profile auf ein Minimum reduziert, ohne dass dafür zusätzliche Stationen oder Handling-Systeme notwendig sind.

Die Schließeinheit kann bei einem Ausführungsbeispiel der Erfindung wenigstens ein, insbesondere zwei Schließeinrichtungen umfassen, die um eine Achse, insbesondere eine Achse senkrecht zur Verfahrrichtung des ersten Zustelltischs verschwenkbar sind. Zum Teil werden bei Anspritzvorrichtungen aus dem Stand der Technik durch massive Pressen beim Anspritzen untersetzt, um die Konturteile während des Anspritzvorgangs zusammenzudrücken und abzudichten. Im vorliegenden Fall kann zu diesem Zweck bei dem vorliegenden Ausführungsbeispiel wenigstens eine Haltevorrichtung verwendet werden, um die Konturteile während der Anspritzung dicht und/oder geschlossen zu halten, die der Leichtbauweise eher entspricht. Die Anspritzvorrichtung mit der Schließeinheit muss somit vergleichsweise kompakt ausgebildet sein. Für die Leichtbauweise kann zum Beispiel jede der Haltevorrichtungen wenigstens einen Pneumatikzylinder als Anpressdruckvorrichtung aufweisen, welche dazu ausgebildet ist, auf eines der Konturteile einen Anpressdruck auszuüben. Hiermit ist in der Regel allerdings auch der Anspritzdruck nicht beliebig hoch wählbar und stellt einen limitierenden Faktor dar. Eine Hauptanwendung besteht im vorliegenden Fall daher in der Endkappen-Anspritzung, bei der in der Regel keine hohen Drücke notwendig sind. Auch ist zu berücksichtigen, dass aufgrund der Linearbewegung der Zustelltische der Heißkanal der Anspritzvorrichtung nicht beliebig verfahren werden kann. Die Haltevorrichtung bzw. die Pneumatikzylinder kann zusammen mit der Schließeinrichtung verschränkt werden. Denkbar ist grundsätzlich auch der Einsatz anderer Haltevorrichtungen, die z.B. (Elektro-) Motoren oder Hydraulikzylinder verwenden. Es bietet sich jedoch ein Pneumatikzylinder in der Regel an, um eine Leichtbauweise realisieren zu können. Durch die Möglichkeit, die Schließeinrichtungen mit den Haltevorrichtungen verschwenken zu können, wird der Zugang zur Form bzw. zu den Konturteilen erleichtert.

Bei einer bevorzugten Weiterbildung der Erfindung sind die Konturteile über eine gemeinsame Antriebsvorrichtung bewegbar. Auch hierdurch kann Gewicht eingespart werden, und der Bauraum kann geringer ausfallen, da keine separaten Antriebe für jedes der Konturteile notwendig sind. Die gemeinsame Antriebsvorrichtung kann platzsparend so angeordnet sein, dass sie mit dem Rest der Anspritzvorrichtung nicht in den Weg kommen kann. Dies ist umso wichtiger, da die Schließeinrichtungen mit Haltevorrichtungen auch verschwenkbar sein sollen. Gemäß dieser Weiterbildung wird diese Maßnahme dadurch erreicht, dass die Antriebsvorrichtung auf der dem Transportweg zugewandten Seite des ersten Zustelltischs angeordnet ist.

In vorteilhafter Weise kann ein Schieber verwendet werden, um die Konturteile verschieben zu können. Insbesondere kann ein derartiger Schieber keilförmig ausgebildet sein. Er wird mit einem der Konturteile mechanisch gekoppelt, indem zum Beispiel Schieber und Konturteil aufeinander liegen, wobei beide als entgegengesetzt angeordnete Keile ineinander gelegt sind. Wird der keilförmige Schieber sodann verschoben, ist das Konturteil so gelagert, dass es sich nicht seitlich in der Richtung, in welcher der Schieber verschoben wird, bewegt, sondern der Keilform folgend, senkrecht dazu verschoben wird. Auf diese Weise wird eine Bewegung der Konturteile senkrecht zur Drehebene des Steuerrings ermöglicht. Die Schieber bilden somit in gewisser Weise einen Teil eines Getriebes zur Übertragung von Kräften und zum Bewegen der Konturteile. Diese Maßnahme kann somit beibehalten werden, dass nur eine Antriebsvorrichtung vorgesehen ist, die zentral den Steuerring antreibt. Durch eine Kopplung des Steuerrings und der Schieber kann wiederum eine Bewegung parallel zur Drehachse des Steuerrings ermöglicht werden. Dies erhöht die Flexibilität der Schließeinrichtung.

Steuerring und Schieber können jeweils über eine Steuernut und einen in die Steuernut eingreifenden Mitnehmerbolzen miteinander mechanisch gekoppelt sein. Im Grunde handelt es sich hierbei um eine besonders platzsparende Kopplung, da die entsprechenden Teile aufeinanderliegen können und der Steuerring so angebracht werden kann, dass nach außen kein Bauraum benötigt wird: Da der Mitnehmerbolzen in die Steuernut eingreift, benötigt dieser keinen zusätzlichen Bauraum. Darüber hinaus wird die Kraft bei dieser Ausführung direkt übertragen.

Grundsätzlich ist es auch denkbar, dass der Mitnehmerbolzen direkt in eine Steuernut im Konturteil eingreift. In diesem Fall ist es jedoch nicht mehr möglich, dass das Konturteil sich parallel zur Drehachse des Steuerrings bewegt, denn hierzu bedarf es einer weiteren mechanischen Übertragung, die grundsätzlich durch den Schieber erreicht werden kann.

Wie bereits oben erläutert, kann mit dem Steuerring Platz eingespart werden, denn dieser kann entsprechend über eine Ausnehmung im Zentrum verfügen, die wie folgt genutzt wird: Der erste Zustelltisch kann dabei so verfahren werden, dass das in der Bearbeitungsposition platzierte Profil in die Ausnehmung eingebracht wird. Die Einbringung in die Form kann dann auf der dem Transportweg gegenüberliegenden Seite erfolgen. Der Steuerring bildet gewissermaßen die Abtrennung hinsichtlich der dem Transportweg zugewandten Seite. Der Zustelltisch wird so verschoben, bis das Profil in die Ausnehmung eingreift. Auf dieser, dem Transportweg zugewandten Seite kann entsprechend zum Beispiel auch der Motor zum Antrieb des Steuerrings montiert sein. Ferner kann der Motor seitlich zum Steuerring bzw. seitlich zum Profil angeordnet werden, sodass das Profil nicht mit ihm kollidieren kann. Erst auf der in Bezug auf den Steuerring dem Transportweg gegenüberliegenden Seite befindet sich sodann der Rest der Anspritzvorrichtung sowie die verschwenkten Schließeinrichtungen mit den Pneumatikzylinder.

Die Form kann während der Bewegung des Zustelltischs, also der Relativbewegung zum Profil immer weiter geschlossen werden, während sich das Profil relativ gesehen durch die Ausnehmung im Steuerring hindurch bewegt (eigentlich wird der Zustelltisch verfahren und das Profil in der Bearbeitungsposition gehalten). Die Form kann auch erst dann geschlossen werden, wenn der Zustelltisch bereits linear zum Profil hin verschoben worden ist. Die Keimung erfolgt also im Grunde über eine Art Backenfutter. Als Mitnehmerbolzen können zum Beispiel T-Nutensteine verwendet werden, die einfach in die Nut eingesetzt werden können.

Je nach Ausführungsvariante der Erfindung können bei einer in Rede stehenden Transferanlage unterschiedliche Werkzeuge verwendet werden, die auf unterschiedlichen Zustelltischen untergebracht sind. Die Zustelltische können somit nacheinander entlang des Transportweges angeordnet werden, sodass das Profil den Transportweg durchfährt. Je nach Bearbeitungsvorgang verharrt das Profil in der entsprechenden Bearbeitungsposition, bis der Bearbeitungsvorgang mit dem entsprechenden Zustelltisch beendet ist. Der Zustelltisch kann nach der Bearbeitung zurückgefahren werden und das Profil freigeben. Es kann also wenigstens ein weiterer Zustelltisch vorgesehen sein, der zum Beispiel ein Schneidwerkzeug oder eine Biegevorrichtung aufweist. Bei einer besonders bevorzugten Weiterbildung der Erfindung wird neben der Anspritzvorrichtung auf demselben Zustelltisch noch ein weiteres Werkzeug wie zum Beispiel ein Schneidwerkzeug oder eine Biegevorrichtung untergebracht, sodass mit diesem Zustelltisch als Bearbeitungsstation zwei oder mehr Bearbeitungsschritte auf einmal vorgenommen werden können. Hierdurch kann eine besonders kompakte Bauweise realisiert werden.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Fig. 1:: eine schematische Darstellung der Transferanlage (mit unbestückten Zustelltischen),
- Fig. 2:: eine Darstellung der Anspritzvorrichtung für einen Zustelltisch,
- Fig. 3, 4:: eine Darstellung der geschlossenen bzw. geöffneten Form,
- Fig. 5:: eine Darstellung der Antreibsvorrichtung mit Steuerringen, sowie
- Fig. 6:: die Schließeinrichtungen mit veschwenkten Haltevorrichtungen in Form von Pneumatikzylindern.

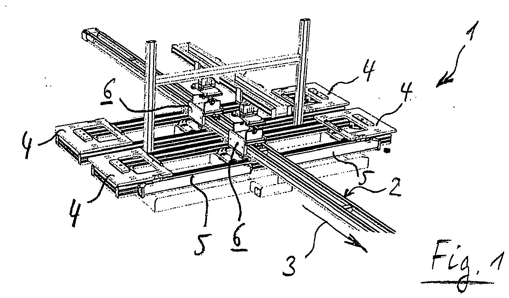

Figur 1 zeigt eine schematische Darstellung der Transferanlage 1 mit der Transportvorrichtung 2 zum Transport des Profils entlang des Transportwegs 3, welche hier durch einen Pfeil in Fig. 1 angezeigt ist. Seitlich des Transportwegs 3 bzw. Transportvorrichtung 2 sind Zustelltische 4 angeordnet, welche wiederum über die Führungen 5 zum Transportweg 3 bzw. zur Transportvorrichtung 2 verfahren werden können, also senkrecht zum Transportweg 3. Die Transportvorrichtung 2 wiederum umfasst Klemmvorrichtungen 6 zum Klemmen der Profile während des Transports. Die Zustelltische sind zur Bearbeitung beider Profil-Endabschnitte auch beidseitig des Transportwegs 3 angeordnet. Darüber hinaus sind verschiedene Zustelltische 4 hinsichtlich des Transportwegs 3 hintereinander in Serie vorgesehen.

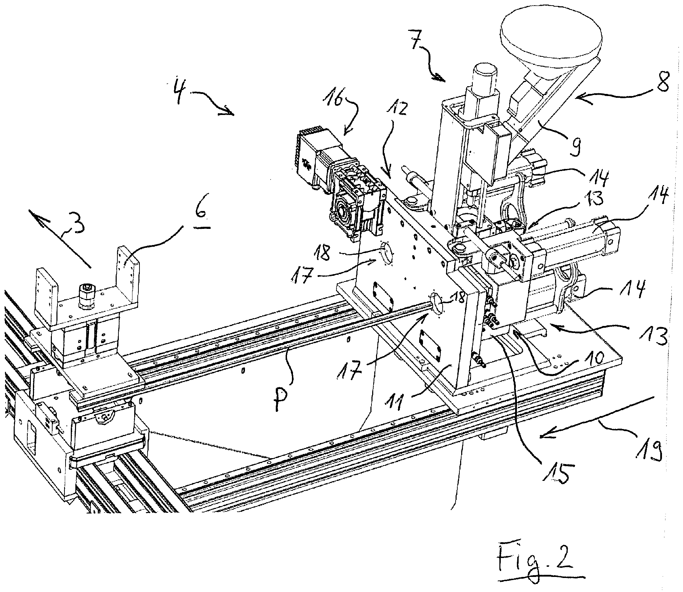

In Figur 1 sind die Zustelltische 4 zur Veranschaulichung nicht mit einem Werkzeug bzw. einer Anspritzvorrichtung bestückt. Die Anspritzvorrichtung 7 wiederum ist in Figur 2 gesondert dargestellt. Diese Anspritzvorrichtung 7 umfasst zunächst die eigentliche Spritzgießeinheit 8, welche über einen festen Heißkanal 9 verfügt, der kurz ausgebildet ist, um auf dem Zustelltisch untergebracht werden zu können, ohne sich zu bewegen. Darunter wiederum ist die Form 10 angebracht, in welche die Kunststoffmasse wiederum eingespritzt wird. Eine Montagewand trennt die Seite, auf der sich der Transportweg 3 befindet, von der Seite, auf der sich wiederum die Anspritzvorrichtung 7 befindet. Diese umfasst wiederum eine Schließeinheit 12, die insgesamt zwei Schließeinrichtungen 13 mit jeweils zwei Haltevorrichtungen 14 umfasst, wobei die Haltevorrichtungen 14 als Pneumatikzylinder ausgebildet sind. Die Schließeinrichtungen 13 umfassen ferner z.B. auch Führungen, mit denen die Pneumatikzylinder 14 gehalten und durch die ein Anpressdruck auf die Konturteile 15 der Form 10 ausgeübt werden kann. Auf diese Art und Weise können die Konturteile auch beim Anspritzen zusammengehalten werden.

Zum Teil ist in der Montageplatte 11 die Antriebsvorrichtung 16 gelagert, die zunächst die Steuerringe 17 aufweist. Die Steuerringe 17 sind jeweils mit einer Ausnehmung 18 versehen, durch die das Profil P in den Bereich der Form 10 eingebracht werden kann. Die Verfahrrichtung 19 des Zustelltisches 4 ist durch den Pfeil in Fig. 2 angedeutet; in dieser wird der Zustelltisch 4 verschoben, bis er in der Ausnehmung 18 das Profil P aufnimmt. Über die Steuerringe 17 werden die Konturteile der Form 10 entsprechend bewegt.

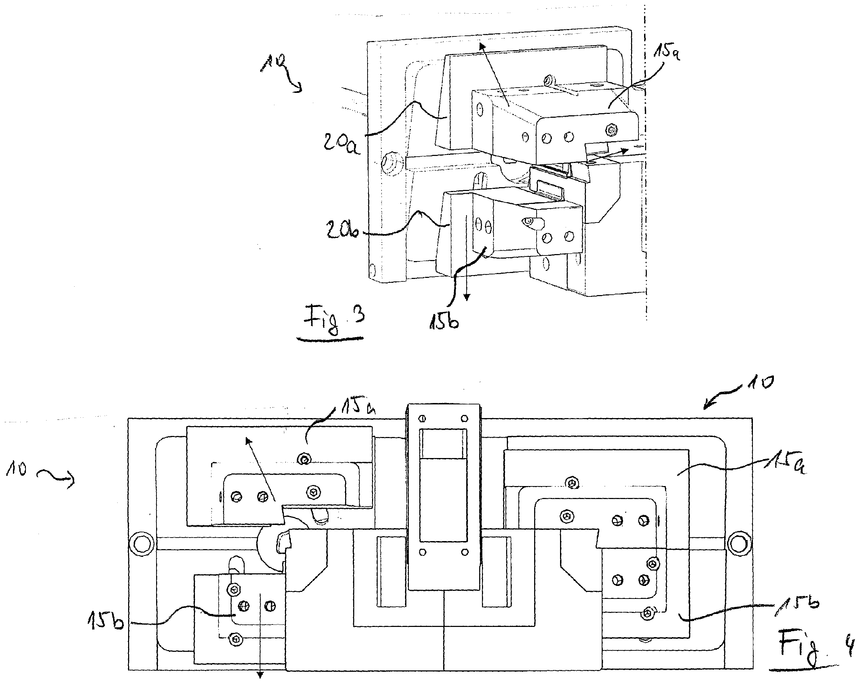

In den Figuren 3 und 4 ist noch einmal das Öffnen der Form im Einzelnen dargestellt: Die Form umfasst hier die Konturteile 15a, 15b die in Figur 3 im geöffneten Zustand dargestellt sind. Die Konturteile 15a, 15b liegen auf den keilförmigen Schiebern 20a, 20b an. Die Konturteile 15a, 15b sind so gelagert, dass sie bei Bewegung der Schieber 20a, 20b über den Keil senkrecht zur Bewegung der Schieber 20a, 20b verschoben werden.

Figur 4 zeigt den Unterschied zwischen einer geschlossenen und einer geöffneten Form 10.

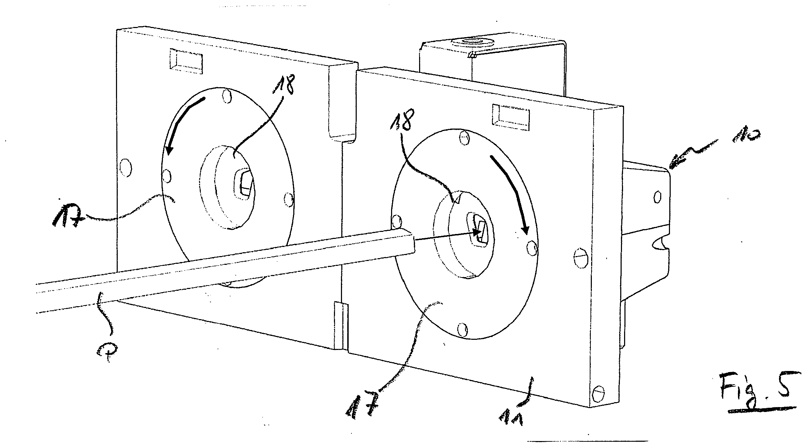

In Figur 5 wiederum sind noch einmal die Steuerringe 17 als Teil der Antriebsvorrichtung 16 dargestellt, das Profil P wird durch die Ausnehmung 18 hindurchgesteckt und gelangt somit in die Form 10, deren Konturteile 15a, 15b zu diesem Zeitpunkt noch geöffnet sind.

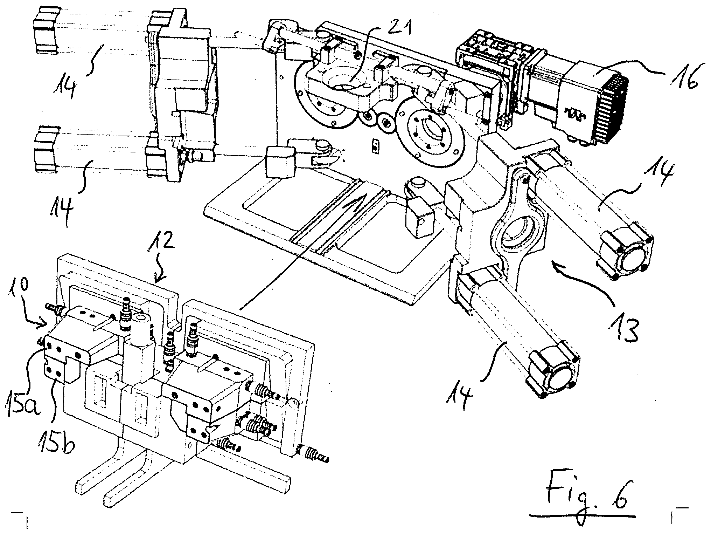

In Figur 6 sind noch einmal die zur Seite verschwenkten Schließeinrichtungen 13 separat dargestellt, wodurch Zugang zu der Stelle geschaffen wird, die zur Anbringung der Schließeinheit 12 mit den Konturteilen 15a, 15 b vorgesehen ist. Zum Anpressen sind vier Pneumatikzylinder 14, verteilt auf zwei Schließeinrichtungen 13 vorgesehen. Durch die Anzahl und Verteilung der Pneumatikzylinder kann ein höherer Anpressdruck erzielt werden, es ist auch möglich, den Druck gleichmäßiger zu verteilen, sodass insgesamt auch der Anspritzdruck erhöht werden kann, da die Formen 10 stabiler zusammengehalten werden. Die Kunststoffmasse wird über die Ausnehmung 21 zu den Formen geführt. Die Form 10 wird, wie Figur 6 dargestellt im gestrichelten Bereich angebracht.

Allen Ausführungsformen und Weiterbildungen der Erfindung ist gemeinsam, dass die Anspritzvorrichtung eine Form zur Aufnahme und Halterung des Profils bei der Anspritzung und zur Ausbildung der beim Anspritzen benötigten Kavität umfasst, wobei die Form wenigstens zwei Konturteile aufweist, um das Profil während der Anspritzung in dem anzuspritzen Teil zu umschließen und die Kavität auszubilden. Dabei weist die Anspritzvorrichtung eine Schließeinheit auf, um die Konturteile zu öffnen und zu schließen. Die Schließeinheit ist dazu ausgebildet, bei der Bewegung des ersten Zustelltischs relativ zum Profil die Konturteile so lange geöffnet zu halten, bis das Profil von den Konturteilen umschlossen ist, wobei die Transportvorrichtung dazu ausgebildet ist, das Profil vor allem im Bereich der Bearbeitungsposition ausschließlich parallel zum Transportweg zu bewegen und vorzugsweise nicht zu drehen. Die Schließeinheit und die Anspritzvorrichtung sind zusammen mit dem ersten Zustelltisch verfahrbar montiert. Der erste Zustelltisch ist soweit in Richtung des Transportwegs bzw. des Profils verfahrbar, bis die Konturteile das Profil in dem anzuspritzenden Teil im geschlossenen Zustand umschließen können. Diese Maßnahme ermöglicht nicht nur eine Leichtbauweise, sondern ermöglicht ein besonderes Maß an Flexibilität beim Umrüsten der Maschine und dem zahlreiche Kostenvorteile infolge des geringeren Material- und Platzbedarfs sowie des Zeitvorteils beim Handling. Gegebenenfalls kann auch eine Arbeitskraft eingespart werden. Eine erfindungsgemäße Transferanlage mit einem derartigen Zustelltisch mit Anspritzvorrichtung eignet sich insbesondere dafür, Anspritzvorgänge bei nicht allzu hohen Drücken, zum Beispiel Endkappen-Anspritzvorgänge, durchführen zu können.

### Bezugszeichen:

- 1: Transferanlage
- 2: Transportvorrichtung
- 3: Transportweg
- 4: Zustelltisch
- 5: Führung
- 6: Klemmvorrichtung
- 7: Anspritzvorrichtung
- 8: Spritzgießeinheit
- 9: Heißkanal
- 10: Form
- 12: Schließeinheit
- 13: Schließeinrichtung
- 14: Haltevorrichtung / Pneumatikzylinder
- 15, 15a, 15b:: Konturteile
- 16: Antriebsvorrichtung
- 17: Steuerring
- 18: Ausnehmung
- 19: Verfahrweg / -richtung des Zustelltischs
- 20a, 20b: Schieber
- 21: Ausnehmung
- P: Profil

## Patentansprüche

1. Transferanlage (1) zum Transport und zur Bearbeitung von Profilen (P) , insbesondere Türdichtungsprofilen für Kraftfahrzeuge, mit einer Transportvorrichtung (2) zum Transport des Profils (P) auf einem Transportweg (3) und mit einem ersten Zustelltisch (4), der relativ zum Transportweg (3) und/oder zum auf dem Transportweg (3) verfahrenen Profil (P), insbesondere senkrecht dazu, verfahrbar ist und der eine Anspritzvorrichtung (7) zur Herstellung einer Endanspritzung, eines weiteren Profilabschnitts, eines Positionierpins und/oder zur Verbindung des Profils (P) mit einem weiteren Profilabschnitt aufweist, wobei die Transportvorrichtung (2) dazu ausgebildet ist, das Profil (P) auf dem Transportweg (3) in einer Bearbeitungsposition zur Bearbeitung des Profils durch die Anspritzvorrichtung (7) zu positionieren, wobei die Anspritzvorrichtung (7) eine Form (10) zur Aufnahme und Halterung des Profils (P) bei der Anspritzung und zur Ausbildung der beim Anspritzen zu verfüllenden Kavität umfasst, wobei die Form (10) wenigstens zwei Konturteile (15, 15a, 15b) aufweist, um das Profil während der Anspritzung in dem anzuspritzenden Teil zu umschließen und die Kavität auszubilden, und wobei die Anspritzvorrichtung eine Schließeinheit aufweist, um die Konturteile (15, 15a, 15b) zu öffnen und zu schließen, wobei die Schließeinheit (12) dazu ausgebildet ist, bei der Bewegung des ersten Zustelltischs (4) relativ zum Profil die Konturteile (15, 15a, 15b) so lange geöffnet zu halten, bis das Profil (P) von den Konturteilen (15, 15a, 15b) umschlossen ist, und wobei die Transportvorrichtung (2) dazu ausgebildet ist, das Profil (P), insbesondere im Bereich der Bearbeitungsposition ausschließlich parallel zum Transportweg (3) zu bewegen, vorzugsweise nicht zu drehen, wobei die Schließeinheit (12) und die Anspritzvorrichtung (7) zusammen mit dem ersten Zustelltisch (4) verfahrbar montiert sind und der erste Zustelltisch (4) soweit in Richtung des Transportwegs (3) und/oder des Profils (P) verfahrbar ist, bis die Konturteile (15, 15a, 15b) das Profil (P) in dem anzuspritzenden Teil im geschlossenen Zustand umschließen können, wobei die Konturteile (15, 15a, 15b) über eine gemeinsame Antriebsvorrichtung (16) bewegbar sind, **dadurch gekennzeichnet, dass** die Antriebsvorrichtung (16) wenigstens einen Steuerring (17) umfasst, welcher drehfest mit wenigstens einem Mitnehmerbolzen verbunden ist.

2. Transferanlage (1) nach Anspruch 1, **dadurch gekennzeichnet, dass** die Schließeinheit (12) wenigstens eine, insbesondere zwei Schließeinrichtungen (13) umfasst, die um eine Achse, insbesondere eine Achse senkrecht zur Verfahrrichtung (19) des ersten Zustelltischs, verschwenkbar sind, wobei die Schließeinrichtungen (13) jeweils wenigstens eine Haltevorrichtung (14) aufweisen, um die Konturteile (15, 15a, 15b) während der Anspritzung dicht und/oder geschlossen zu halten.

3. Transferanlage (1) nach einem der vorgenannten Ansprüche, **dadurch gekennzeichnet, dass** die wenigstens eine Haltevorrichtung (14) wenigstens einen Pneumatikzylinder als Anpressvorrichtung aufweist, der dazu ausgebildet ist, auf eines der Konturteile (15, 15a, 15b) einen Anpressdruck auszuüben.

4. Transferanlage (1) nach einem der vorgenannten Ansprüche, **dadurch gekennzeichnet, dass** die Antriebsvorrichtung (16) auf der dem Transportweg (3) zugewandten Seite des ersten Zustelltisches (4) angeordnet ist.

5. Transferanlage (1) nach einem der vorgenannten Ansprüche, **dadurch gekennzeichnet, dass** die Antriebsvorrichtung (16) einen Motor zum Antreiben und/oder Drehen des Steuerrings (17) umfasst.

6. Transferanlage (1) nach einem der vorgenannten Ansprüche, **dadurch gekennzeichnet, dass** die wenigstens eine Schließeinrichtung (13) jeweils wenigstens einen Schieber (20a, 20b) zum Verschieben wenigstens eines der Konturteile (15, 15a, 15b), insbesondere einen keilförmigen Schieber, der mit wenigstens einem der Konturteile (15, 15a, 15b) gekoppelt ist, umfasst.

7. Transferanlage (1) nach einem der vorgenannten Ansprüche, **dadurch gekennzeichnet, dass** der wenigstens eine Steuerring (17) und der wenigstens eine Schieber (20a, 20b) jeweils über eine Steuernut und einen in die Steuernut eingreifenden Mitnehmerbolzen miteinander gekoppelt sind.

8. Transferanlage (1) nach einem der vorgenannten Ansprüche, **dadurch gekennzeichnet, dass** der wenigstens eine Steuerring (17) eine Ausnehmung (18) im Zentrum aufweist, wobei der erste Zustelltisch (4) so verfahrbar ist, dass das in der Bearbeitungsposition positionierte Profil (P) in die Ausnehmung (18) eingebracht wird und auf der dem Transportweg (3) gegenüberliegenden Seite in die Form (10) aufnehmbar ist.

9. Transferanlage (1) nach einem der vorgenannten Ansprüche, **dadurch gekennzeichnet, dass** entlang des Transportweges (3) wenigstens ein zweiter Zustelltisch (4) vorgesehen ist, der ein Schneidwerkzeug zum Zuschneiden des Profils und/oder eine Biegevorrichtung umfasst und der relativ zum Transportweg und/oder zum auf dem Transportweg (3) verfahrenen Profil (P), insbesondere senkrecht dazu, verfahrbar ist.

10. Transferanlage (1) nach einem der vorgenannten Ansprüche, **dadurch gekennzeichnet, dass** der erste Zustelltisch (4) außer der Anspritzvorrichtung (7) noch wenigstens ein weiteres Werkzeug, insbesondere ein Schneidwerkzeug zum Zuschneiden des Profils und/oder eine Biegevorrichtung umfasst, um einen weiteren Bearbeitungsschritt in der bei der Anspritzung vorgesehenen Bearbeitungsposition des Profils (P) zu ermöglichen.

## Claims

1. Transfer system (1) for transporting and for processing profiles (P), in particular door seal profiles for motor vehicles, having a transportation device (2) for transporting the profile (P) on a transportation path (3), and having a first feed table (4) which is displaceable relative, in particular perpendicularly, to the transportation path (3) and/or to the profile (P) being displaced on the transportation path (3), and which has an injection device (7) for producing an injection-moulded end, a further profile portion, a positioning pin, and/or for connecting the profile (P) to a further profile portion, wherein the transportation device (2) is configured for positioning the profile (P) on the transportation path (3) in a processing position for processing the profile by the injection device (7), wherein the injection device (7) comprises a mould (10) for receiving and mounting the profile (P) during the injection and for configuring the cavity to be filled during the injection, wherein the mould (10) has at least two contour parts (15, 15a, 15b) for enclosing the profile in the part to be injection-moulded during the injection and for configuring the cavity, and wherein the injection device has a closing unit for opening and closing the contour parts (15, 15a, 15b), wherein the closing unit (12) when moving the first feed table (4) relative to the profile is configured for keeping the contour parts (15, 15a, 15b) open until the profile (P) is enclosed by the contour parts (15, 15a, 15b), and wherein the transportation device (2) is configured for moving, preferably not rotating, the profile (P), in particular in the region of the processing position, exclusively parallel to the transportation path (3), wherein the closing unit (12) and the injection device (7) are assembled so as to be displaceable conjointly with the first feed table (4), and the first feed table (4) in the direction of the transportation path (3) and/or of the profile (P) is displaceable until the contour parts (15, 15a, 15b) in the closed state can enclose the profile (P) in the part to be injection-moulded, wherein the contour parts (15, 15a, 15b) are movable by way of a common drive device (16), **characterized in that** the drive device (16) comprises at least one control ring (17) which is connected in a rotationally fixed manner to at least one entrainment pin.

2. Transfer system (1) according to Claim 1, **characterized in that** the closing unit (12) comprises at least one, in particular two, closing installations (13) which are pivotable about an axis, in particular an axis perpendicular to the displacement direction (19) of the first feed table, wherein the closing installations (13) have in each case at least one holding device (14) for keeping the contour parts (15, 15a, 15b) tight and/or closed during the injection.

3. Transfer system (1) according to one of the preceding claims, **characterized in that** the at least one holding device (14) has at least one pneumatic cylinder as a contact pressure device, said pneumatic cylinder being configured for exerting a contact pressure on one of the contour parts (15, 15a, 15b).

4. Transfer system (1) according to one of the preceding claims, **characterized in that** the drive device (16) is disposed on that side of the first feed table (4) that faces the transportation path (3).

5. Transfer system (1) according to one of the preceding claims, **characterized in that** the drive device (16) comprises a motor for driving and/or rotating the control ring (17).

6. Transfer system (1) according to one of the preceding claims, **characterized in that** the at least one closing installation (13), for displacing at least one of the contour parts (15, 15a, 15b), comprises in each case at least one slide (20a, 20b), in particular a wedge-shaped slide, which is coupled to at least one of the contour parts (15, 15a, 15b).

7. Transfer system (1) according to one of the preceding claims, **characterized in that** the at least one control ring (17) and the at least one slide (20a, 20b) are in each case coupled to one another by way of a control groove and an entrainment pin that engages in the control groove.

8. Transfer system (1) according to one of the preceding claims, **characterized in that** the at least one control ring (17) in the center has a clearance (18), wherein the first feed table (4) is displaceable such that the profile (P) positioned in the processing position is introduced into the clearance (18) and on that side that lies opposite the transportation path (3) is able to be received in the mould (10).

9. Transfer system (1) according to one of the preceding claims, **characterized in that** at least one second feed table (4) which comprises a cutting tool for trimming the profile and/or a bending device and which is displaceable relative, in particular perpendicularly, to the transportation path and/or to the profile (P) being displaced on the transportation path (3) is provided along the transportation path (3).

10. Transfer system (1) according to one of the preceding claims, **characterized in that** the first feed table (4) aside from the injection device (7) also comprises at least one further tool, in particular a cutting tool for trimming the profile and/or a bending device, so as to enable a further processing step in the processing position of the profile (P) provided during the injection.

## Revendications

1. Installation de transfert (1) pour le transport et le traitement de profilés (P), en particulier de profilés d'étanchéité de porte pour véhicules automobiles, avec un dispositif de transport (2) pour le transport du profilé (P) sur une voie de transport (3) et avec une première table d'alimentation (4) qui peut être déplacée par rapport à la voie de transport (3) et/ou au profilé (P) déplacé sur la voie de transport (3), en particulier perpendiculairement à celle-ci, et qui comporte un dispositif d'injection (7) pour la réalisation d'une injection finale, d'une autre section de profilé, d'une broche de positionnement et/ou pour relier le profilé (P) à une autre section de profilé, le dispositif de transport (2) étant conçu pour positionner le profilé (P) sur la voie de transport (3) dans une position de traitement pour le traitement du profilé par le dispositif d'injection (7), le dispositif d'injection (7) comprenant un moule (10) pour recevoir et maintenir le profilé (P) lors de l'injection et pour former la cavité à remplir lors de l'injection, le moule (10) présentant au moins deux pièces de contour (15, 15a, 15b), pour entourer le profilé pendant l'injection dans la pièce pour injecter et pour former la cavité, et le dispositif d'injection présentant une unité de fermeture pour ouvrir et fermer les pièces de contour (15, 15a, 15b), l'unité de fermeture (12) étant conçue de manière, lors du déplacement de la première table d'alimentation (4) par rapport au profilé, à maintenir les pièces de contour (15, 15a, 15b) ouvertes jusqu'à ce que le profilé (P) soit entouré par les pièces de contour (15, 15a, 15b), et le dispositif de transport (2) étant conçu pour transporter le profilé (P), en particulier dans la zone de la position de traitement, exclusivement parallèlement à la voie de transport (3), de préférence sans tourner, l'unité de fermeture (12) et le dispositif d'injection (7) étant montés de manière à pouvoir être déplacés conjointement avec la première table d'alimentation (4) et la première table d'alimentation (4) étant apte à être déplacée dans la direction de la voie de transport (3) et/ou du profilé (P), jusqu'à ce que les pièces de contour (15, 15a, 15b) soient aptes à entourer le profilé (P) dans la pièce pour injecter à l'état fermé, les pièces de contour (15, 15a, 15b) étant aptes à être déplacées par un dispositif d'entraînement commun (16),
**caractérisée en ce que** le dispositif d'entraînement (16) comprend au moins un anneau de commande (17) qui est relié de manière solidaire en rotation à au moins un boulon d'entraînement.

2. Installation de transfert (1) selon la revendication 1, **caractérisée en ce que** l'unité de fermeture (12) comprend au moins un, en particulier deux dispositifs de fermeture (13), qui sont aptes à pivoter autour d'un axe, en particulier un axe perpendiculaire à la direction de déplacement (19) de la première table d'alimentation, les dispositifs de fermeture (13) présentant chacun au moins un dispositif de maintien (14) pour maintenir les pièces de contour (15, 15a, 15b) dans une relation d'étanchéité et/ou fermées pendant l'injection.

3. Installation de transfert (1) selon l'une des revendications précédentes, **caractérisée en ce que** ledit au moins un dispositif de maintien (14) présente au moins un vérin pneumatique en tant que dispositif de pression, qui est conçu pour exercer une pression d'application sur l'une des pièces de contour (15, 15a, 15b).

4. Installation de transfert (1) selon l'une des revendications précédentes, **caractérisée en ce que** le dispositif d'entraînement (16) est disposé sur le côté de la première table d'alimentation (4) qui est tourné vers la voie de transport (3).

5. Installation de transfert (1) selon l'une des revendications précédentes, **caractérisée en ce que** le dispositif d'entraînement (16) comprend un moteur pour entraîner et/ou faire tourner l'anneau de commande (17).

6. Installation de transfert (1) selon l'une des revendications précédentes, **caractérisée en ce que** ledit au moins un dispositif de fermeture (13) comprend respectivement au moins un coulisseau (20a, 20b) pour déplacer au moins l'une des pièces de contour (15, 15a, 15b), en particulier un coulisseau en forme de coin qui est relié à au moins l'une des pièces de contour (15, 15a, 15b).

7. Installation de transfert (1) selon l'une des revendications précédentes, **caractérisée en ce que** ladite au moins une bague de commande (17) et ledit au moins un coulisseau (20a, 20b) sont reliés l'un à l'autre respectivement par une rainure de commande et un boulon d'entraînement s'engageant dans la rainure de commande.

8. Installation de transfert (1) selon l'une des revendications précédentes, **caractérisée en ce que** ladite au moins un anneau de commande (17) présente un évidement (18) au centre, la première table d'alimentation (4) étant apte à être déplacée de telle sorte que le profilé (P) positionné dans la position de traitement est introduit dans l'évidement (18) et est apte à être reçu dans le moule (10) sur le côté opposé à la voie de transport (3).

9. Installation de transfert (1) selon l'une des revendications précédentes, **caractérisée en ce qu'**il est prévu le long de la voie de transport (3) au moins une deuxième table d'alimentation (4) qui comprend un outil de coupe pour découper le profilé et/ou un dispositif de pliage et qui est apte à être déplacée par rapport à la voie de transport et/ou au profilé (P) déplacé sur la voie de transport (3), notamment perpendiculairement à celle-ci/celui-ci.

10. Installation de transfert (1) selon l'une des revendications précédentes, **caractérisée en ce que** la première table d'alimentation (4) comprend, outre le dispositif d'injection (7), au moins un autre outil, en particulier un outil de coupe pour la découpe du profilé et/ou un dispositif de pliage, afin de permettre une étape de traitement supplémentaire dans la position de traitement du profilé (P) prévue lors de l'injection.
